# EUROPÄISCHE PATENTANMELDUNG

(11) **EP 2 113 325 A1**
(43) Veröffentlichungstag der Anmeldung: **04.11.2009**
(21) Anmeldenummer: 09004462.9
(22) Anmeldetag: 27.03.2009
(51) Int. Cl.: B23B 51/02, B23B 51/06

(54) **Zylindrisches Bohrwerkzeug**

(30) Priorität: 02.05.2008 DE 202008006036 U
(71) Anmelder: Günther Wirth Hartmetallwerkzeuge GmbH & Co. KG, 88481 Balzheim (DE)
(72) Erfinder: Wirth, Günter, 88484 Balzheim 2 (DE)
(74) Vertreter: Vetter, Hans

(57) **Zusammenfassung**

Es wird ein zylindrisches Bohrwerkzeug mit zwei oder mehr wendelartigen Schneiden (10, 11) vorgeschlagen, wobei am Übergang von jeder Schneidkante dieser Schneiden (10, 11) zur zugeordneten Freifläche (24, 25) jeweils eine Führungsfase (18, 21) vorgesehen ist, der in der Gegenschneidrichtung wenigstens zwei weitere Führungsfasen (19, 20 bzw. 22, 23) beabstandet folgen. Im Zwischenraum zwischen den Führungsfasen (18 bis 23) ist jeweils eine radiale Vertiefung (32 bis 35) ausgebildet und der radiale Abstand jeder Führungsfase (18 bis 23) entspricht zur Längsmittelachse dem Schneidradius.

## Beschreibung

Die Erfindung betrifft ein zylindrisches Bohrwerkzeug mit zwei oder mehr wendelartigen Schneiden. Derartige Bohrwerkzeuge sind in vielfachen Ausgestaltungen bekannt. Bei einem aus der DE 20 2004 010 977 U1 bekannten Bohrwerkzeug, das als Spiralbohrer ausgebildet ist, sind an den beiden Randseiten der Stege jeweils Führungsfasen vorgesehen, um den Bohrer im Bohrloch zu führen. Diese Führungsfasen legen den Bohreraußendurchmesser fest.

Eine Aufgabe der vorliegenden Erfindung besteht darin, ein Bohrwerkzeug zu schaffen, das bei verbesserter Bohrqualität bereits in der Anbohrphase eine große Fluchtgenauigkeit besitzt.

Diese Aufgabe wird erfindungsgemäß durch ein zylindrisches Bohrwerkzeug mit den Merkmalen des Anspruches 1 gelöst.

Durch die wenigstens drei Führungsfasen pro Schneide wird erreicht, dass das Bohrwerkzeug sehr viel stabiler bereits in der Anbohrphase seine Fluchtgenauigkeit einhält. Weiter ergibt sich durch einen zusätzlichen Glättevorgang mit Hilfe der zusätzlichen z.B. als Rundschlifffasen ausgebildeten Führungsfasen eine viel glattere und bessere Bohroberfläche. Der Reibwert zwischen Werkzeug und Werkstück kann insgesamt verringert werden. Dies wird dadurch erreicht, dass nicht nur Führungsfasen an den beiden Randseiten der Stege angeordnet sind, sondern zusätzlich noch wenigstens eine Führungsfase dazwischen.

Durch die in den Unteransprüchen aufgeführten Maßnahmen sind vorteilhafte Weiterbildungen und Verbesserungen des im Anspruch 1 angegebenen Bohrwerkzeugs möglich.

Eine Breite der Führungsfasen, die jeweils dem 0,005- bis 0,25-fachen des Werkzeugdurchmessers entspricht hat sich am günstigsten erwiesen. Innerhalb dieses Bereichs können die einzelnen Führungsfasen auch unterschiedliche Breiten aufweisen.

Die radialen Vertiefungen zwischen den einzelnen Führungsfasen können bevorzugt auch unterschiedliche Tiefen aufweisen. Durch ihre Position und Form können sie als zusätzliche Schmierquelle für das aus der Stirn austretende Kühlmedium entlang der Längsachse des Bohrwerkzeugs optimiert werden. Auch können kleinere Späne über diese Vertiefungen abtransportiert werden, was eine Entlastung des Spanraums bedeutet.

Bevorzugt folgt stirnseitig den Schneiden jeweils in der Gegenschneidrichtung als Freiflächen ein erster Hinterschliff und daran anschließend ein zweiter Hinterschliff, die unterschiedliche Schliffwinkel besitzen. Der zweite Hinterschliff erstreckt sich dabei bevorzugt bis zur zweiten radialen Vertiefung hinein.

Zur Kühlung des Bohrwerkzeugs beim Bohrvorgang erstrecken sich mehrere Kühlmittelkanäle in der Längsrichtung durch das Bohrwerkzeug hindurch und münden an der Werkzeugstirnseite.

Ihre Zahl entspricht zweckmäßigerweise der Zahl der Schneiden bzw. Stege.

Als besonders günstig hat es sich erwiesen, wenn die Kühlmittelkanäle jeweils im Bereich der zweiten Führungsfase münden, insbesondere zwischen der zweiten und dritten Führungsfase. Sie münden dabei bevorzugt jeweils am zweiten Hinterschliff.

Ein Ausführungsbeispiel der Erfindung ist in der Zeichnung dargestellt und in der nachfolgenden Beschreibung näher erläutert. Es zeigen:
- Fig. 1: eine Seitenansicht eines zylindrischen Bohrwerkzeugs als Ausführungsbeispiel der Erfindung und
- Fig. 2: eine vergrößerte Stirnansicht dieses Bohrwerkzeugs.

Das in den beiden Figuren dargestellte, als Spiralbohrer ausgebildete zylindrische Bohrwerkzeug besitzt zwei Schneiden 10, 11, die sie zunächst von der Bohrerspitze 12 aus schräg radial nach außen verlaufen und sich von dort aus wendelförmig in Richtung zum hinteren Schaft 13 hin fortsetzen. Dabei verlaufen die beiden Schneiden 10, 11 jeweils symmetrisch gegenüberliegend. Anstelle der beiden Schneiden 10, 11 des dargestellten zweischneidigen Bohrwerkzeugs kann auch eine größere Zahl von Schneiden treten.

Jede Schneide 10, 11 ist in Schneidrichtung gesehen jeweils an der Vorderseite eines Stegs 14, 15 angeordnet, wobei sich Spannuten 16, 17 zwischen den Stegen 14, 15 erstrecken. An jedem Steg 14, 15 sind jeweils am radial äußersten Punkt drei als Rundschlifffasen ausgebildete Führungsfasen 18 bis 20 bis 21 bis 23 angeordnet. Durch diese Führungsfasen 18 bis 23 wird das Bohrwerkzeug im Bohrloch zentral geführt. Die Führungsfasen 18 bis 23 legen daher den Bohreraußenumfang fest. In der Gegenschneidrichtung gesehen ist die jeweils erste Führungsfase 18 bzw. 21 direkt an der Schneidkante der jeweiligen Schneide 10, 11 am Übergang zur zugeordneten Freifläche 24, 25 angeordnet. Die Freifläche 24 bwz. 25 wird jeweils durch einen ersten Hinterschliff 26, 27 und einen sich daran anschließenden zweiten Hinterschliff 28, 29 gebildet. Die beiden Hinterschliffe 26, 27 bzw. 28, 29 besitzen unterschiedliche Schliffwinkel. An den zweiten Hinterschliff 28, 29 schließt sich dann jeweils eine Ausspitzung 30, 31 an, die sich bis zum in der Gegenschneidrichtung gesehen hinteren Ende des jeweiligen Stegs 14, 15 erstreckt.

Die drei Führungsfasen 18 bis 20 bzw. 21 bis 23 sind am Außenumfang des jeweiligen Stegs 14, 15 verteilt angeordnet, d.h., die erste Führungsfase 18, 21 befindet sich an der Schneidseite des jeweiligen Stegs 14, 15, die letzte Führungsfase 20, 23 am gegenüberliegenden Ende des jeweiligen Stegs 14, 15 und die zweite Führungsfase 19, 22 jeweils dazwischen. Die Breite der Führungsfasen 18 bis 23 entspricht jeweils zwischen dem 0,005-fachen bis zum 0,25-fachen des Werkzeugdurchmessers, wobei diese Breiten auch unterschiedlich sein können.

Jeweils zwischen der ersten Führungsfase 18, 21 und der zweiten Führungsfase 19, 22 ist eine erste radiale Vertiefung 32, 33 und zwischen der zweiten Führungsfase 19, 22 und der dritten Führungsfase 20, 23 eine zweite radiale Vertiefung 34, 35 angeordnet. Diese Vertiefungen 32 bis 35 können dieselbe Tiefe aufweisen, werden jedoch in aller Regel unterschiedlich gewählt. Die maximal mögliche Tiefe ergibt sich aus der Anzahl der Führungsfasen 18 bis 23 und deren Abstand zueinander.

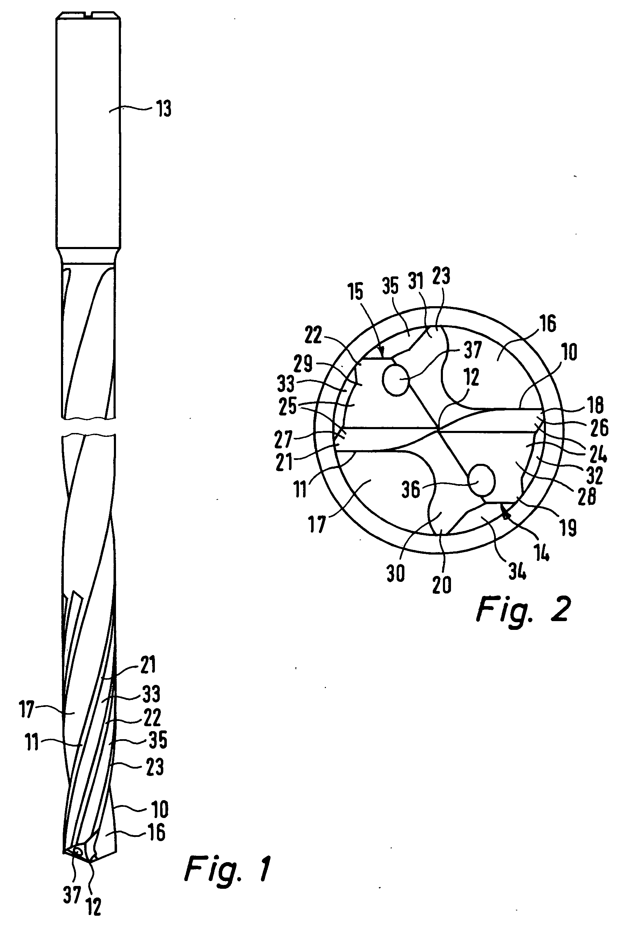

Längs durch das Bohrwerkzeug verlaufen zwei Kühlmittelkanäle 36, 37, um Kühlmittel der Bohrspitze 12 zuzuführen. Die Kühlmittelkanäle 36, 37 münden daher an der bohrseitigen schrägen Stirnfläche und zwar gemäß Fig. 2 im Bereich der mittleren Führungsfasen 19, 22, und zwar im zweiten Hinterschliff 28, 29 der Freiflächen 24, 25. Dies bedeutet beim Ausführungsbeispiel, dass sich der zweite Hinterschliff 28, 29, der am relativ schmalen ersten Hinterschliff 26, 27 ansetzt, bis über die mittlere Führungsfase 19, 22 hinweg erstreckt. Die Zahl der Kühlmittelkanäle 36, 37 hängt nicht zuletzt von der Zahl der Schneiden 10, 11 bzw. Stege 14, 15 ab. Da die Stege 14, 15 wendelförmig verlaufen, weisen die Kühlmittelkanäle 36, 37 einen entsprechend wendelförmigen Verlauf auf.

Beim dargestellten Ausführungsbeispiel schließt die letzte Führungsfase 20, 23 jeweils mit der von der Schneide 10, 11 entfernten Rückkante der Stege 14, 15 ab. Dies ist jedoch nicht zwingend. Weiterhin befindet sich die mittlere Führungsfase 19, 22 ungefähr mittig zwischen der ersten Führungsfase 18, 21 und der letzten Führungsfase 20, 23. Hier können alternativ hierzu die Führungsfasen 18 bis 23 mit ungleicher Teilung entlang der Teilmantelfläche des jeweiligen Schneidrückens angeordnet sein. Sie werden aber in aller Regel nach der Position der Kühlmittelkanäle 36, 37 angeordnet, um einen optimalen Übergang des Kühlmediums in die Vertiefungen 32 bis 35 zwischen den Führungsfasen 18 bis 23 zu erhalten.

Beim dargestellten Ausführungsbeispiel ist ein Facetten-Anschliff realisiert. Prinzipiell möglich ist selbstverständlich auch ein radialer Hinterschliff an der Stirnseite.

Die Gesamtauswirkung der dargestellten und beschriebenen Maßnahmen bedeutet für das Bohrwerkzeug eine Verringerung der Aufbauschneiden, eine Erhöhung des Vorschubs und vor allem eine Erhöhung der Schnittgeschwindigkeit. Bezüglich der Zerspanung wird eine Reduzierung der Schnittkräfte erreicht, was wiederum zur Erhöhung der Lebensdauer des Bohrwerkzeugs führt.

## Patentansprüche

1. Zylindrisches Bohrwerkzeug mit zwei oder mehr wendelartigen Schneiden (10, 11), wobei am Übergang von jeder Schneidkante dieser Schneiden (10, 11) zur zugeordneten Freifläche (24, 25) jeweils eine Führungsfase (18, 21) vorgesehen ist, der in der Gegenschneidrichtung wenigstens zwei weitere Führungsfasen (19, 20 bzw. 22, 23) beabstandet folgen, wobei im Zwischenraum zwischen den Führungsfasen (18 bis 23) jeweils eine radiale Vertiefung (32 bis 35) ausgebildet ist und wobei der radiale Abstand jeder Führungsfase (18 bis 23) zur Längsmittelachse dem Schneidradius entspricht.

2. Bohrwerkzeug nach Anspruch 1, **dadurch gekennzeichnet, dass** die Breite der Führungsfasen (18 bis 23) jeweils das 0,005- bis 0,25-fache des Werkzeugdurchmessers beträgt und untereinander auch unterschiedlich sein kann.

3. Bohrwerkzeug nach Anspruch 1 oder 2, **dadurch gekennzeichnet, dass** die radialen Vertiefungen (32 bis 35) unterschiedliche Tiefen aufweisen.

4. Bohrwerkzeug nach einem der vorhergehenden Ansprüche, **dadurch gekennzeichnet, dass** stirnseitig den Schneiden (10, 11) jeweils in der Gegenschneidrichtung als Freiflächen (24, 25) eine erster Hinterschliff (26, 27) und daran anschließend ein zweiter Hinterschliff (28, 29) folgt, die unterschiedliche Schliffwinkel besitzen.

5. Bohrwerkzeug nach Anspruch 4, **dadurch gekennzeichnet, dass** sich der zweite Hinterschiff (28, 29) bis zur zweiten radialen Vertiefung (34, 35) hinein erstreckt.

6. Bohrwerkzeug nach einem der vorhergehenden Ansprüche, **dadurch gekennzeichnet, dass** sich mehrere Kühlmittelkanäle (36, 37) in der Längsrichtung hindurch erstrecken und an der bearbeitungsseitigen Stirnseite münden.

7. Bohrwerkzeug nach Anspruch 6, **dadurch gekennzeichnet, dass** die Zahl der Kühlmittelkanäle (36, 37) der Zahl der Schneiden (10, 11) entspricht.

8. Bohrwerkzeug nach Anspruch 6 oder 7, **dadurch gekennzeichnet, dass** die Kühlmittelkanäle (36, 37) jeweils im Bereich der zweiten Führungsfase (19, 22), insbesondere zwischen der zweiten Führungsfase (19, 22) und dritten Führungsfase (20, 23) münden.

9. Bohrwerkzeug nach einem der Ansprüche 6 bis 8, **dadurch gekennzeichnet, dass** die Kühlmittelkanäle (36, 37) jeweils am zweiten Hinterschliff (28, 29) münden.
